# EUROPÄISCHE PATENTSCHRIFT

(11) **EP 1 433 662 B1**
(45) Veröffentlichungstag und Bekanntmachung des Hinweises auf die Patenterteilung: **26.05.2010**
(21) Anmeldenummer: 03103651.0
(22) Anmeldetag: 02.10.2003
(51) Int. Cl.: B60R 16/02, G10L 15/00

(54) **Informationssystem für Fahrzeuge und Verfahren zur Sprachsteuerung**
Information system for vehicle and process for voice control
Système d'information pour un véhicule et procédé de commande vocale

(30) Priorität: 24.12.2002 DE 10260976
(43) Veröffentlichungstag der Anmeldung: 30.06.2004
(73) Patentinhaber: ROBERT BOSCH GMBH, 70442 Stuttgart (DE)
(72) Erfinder: Engeln, Arnd, 72072, Tuebingen (DE)

(56) Entgegenhaltungen:
- WO-A-97/10583

## Beschreibung

Die Erfindung betrifft ein Informationssystem für Fahrzeuge, gemäß den Gegenstand des Anspruchs 1, sowie ein Verfahren zur Sprachsteuerung elektronischer Geräte, insbesondere von Informationssystemen für Fahrzeuge, gemäß den gegenstand des Anspruchs 2.

Moderne Kraftfahrzeuge verfügen über Informationssysteme, um den Fahrer bei der Fahraufgabe oder anderen Nebenaufgaben zu unterstützen oder aber um die Fahrt insgesamt angenehmer zu machen. Derartige Informations-systeme können beispielsweise Navigationssysteme oder ähnliches beinhalten. Die in das Informationssystem integrierten elektronischen Geräte weisen relativ komplexe Bedienfunktionen auf, wobei die manuelle Bedienung eine mehr oder minder starke visuelle und manuelle Zuwendung erfordert. Die Eingabe und Steuerung eines Informationssystems kann daher nur unter Beeinträchtigung der Verkehrssicherheit parallel zur Bewältigung der primären Fahraufgabe durchgeführt werden.

Es ist daher bekannt, die elektronischen Geräte insbesondere in Fahrzeugen durch Spracheingabe zu steuern. Eine solche Sprachsteuerung erfordert vor allem in Verbindung mit einer Dialogspracheingabe mit akustischer Benutzerführung kaum visuelle Zuwendung.

Bei der Dialoggestaltung, beispielsweise für Informationssysteme in Fahrzeugen (Fahrerinformationssysteme FIS) sind die folgenden Probleme festzustellen:
1. Die Nutzer haben unterschiedliche Systemerkenntnisse. Abgesehen von einzelnen bei allen Menschen gleichermaßen vorzufindenden Reiz-Reaktionsketten, wie z. B. Erschrecken auf plötzliches Geräusch, Abwendung von hartem und Zuwendung zu weichem Geräusch, müssen derartige Ketten vom Nutzer zunächst gelernt werden. Bezogen auf Fahrerinformationssysteme betrifft dies vorrangig die eindeutige Definition, gegenseitige Abgrenzung und Hierarchisierung von Begrifflichkeiten in verästelten Steuerungsmenüstrukturen. Das Problem liegt nun darin, dass im Fahrzeugbereich Informationssysteme sowohl für den ungeübten Neuling, wie auch für den routinierten Nutzer attraktiv sein müssen. Aufwendige Nutzerführungen können den routinierten Anwender aufgrund des Bedienungsaufwandes abschrecken. Ohne eine derartige Nutzerführung findet jedoch der ungeübte Neuling keinen Zugang.
2. Die Nutzer erwarten konsistente Eingabe-Ausgabe-Beziehungen. Eine häufig bevorzugte Reaktion auf unterschiedliche Systemkenntnisse und Systemerwartungen der Nutzer liegt in der Entwicklung adaptiver Systeme. Hierdurch wird jedoch die Erlernbarkeit deutlich erschwert, weil der Nutzer konsistente Beziehungen zwischen Ein- und Ausgabe erwartet. Führt eine identische Eingabe zu unterschiedlichen Ausgabefunktionen, so wird das Erlernen des Systems stark erschwert.
3. Hierarchisierte Menüstrukturen sind zu abstrakt. Während es den meisten Nutzern leicht fällt, Parallel-Begriffe für einen vorgegebenen Begriff zu finden, beinhaltet die Definition von über- und untergeordneten Begriffen eine erhöhte mentale Leistung. Herkömmlicherweise werden hierarchisierte Menüs jedoch als einzige Möglichkeit angesehen, komplexe Funktionalitäten in einer überschaubaren Zahl paralleler Funktionen zu strukturieren.
4. Die Nutzer erwarten differenzierte Ausgabefunktionen bei einfacher Systembedienung. In der aktuellen Entwicklung von Fahrerinformationssystemen gehen auf der einen Seite die Nutzerwünsche hin zu einem immer größeren Funktionsumfang der Systeme. Auf der anderen Seite besteht aus Sicht des Nutzers nach wie vor der Anspruch, die Systembedienung ohne nennenswerten Lernaufwand zu beherrschen. Der Bedarf nach differenzierten Funktionalitäten ist daher diametral gegenläufig zu der Anforderung nach minimalem Bedienaufwand. Technisch betrachtet kann jedoch die Zahl der Bedienfunktionen nicht kleiner als die Zahl der vom Nutzer frei wählbaren Ausübungsfunktionen sein. Das Problem wird daher herkömmlicherweise durch hierarchisierte Steuerungsmenü-Strukturen und/oder adaptive Systeme gelöst.
5. Die Nutzer zeigen eine nur geringe Lernbereitschaft. In der Regel erwartet der Nutzer ein System mit minimalem Lernaufwand bedienen zu können. Die Bedienungsanleitung wird in der Regel nicht gelesen. Stattdessen werden die Funktionen eines elektronischen Geräts zumeist unsystematisch durch Probieren erforscht. Hierdurch werden verfügbare Systeme oftmals nur in Teilfunktionen und ineffizient genutzt. Damit sinkt aber auch die Produktattraktivität.
6. Fahrerinformationssysteme können von der Fahraufgabe ablenken. Anstatt bei stehendem Fahrzeug den Umgang mit einem Fahrerinformationssystem zu üben, werden die Systeme oft während der Fahrt durch den Nutzer ausprobiert. Selbst für geübte Nutzer bedingt die Bedienung komplexer Funktionen häufig eine lang andauernde Blick- und Aufmerksamkeitszuwendung zum Fahrerinformationssystem und damit weg vom Verkehrsgeschehen. Ursache hierfür sind neben langen Dialogen durch hierarchisierte Menüstrukturen vorrangig manuelle Eingabeerfordernisse und visuelle Kontrolle bzw. Informationsaufgabe.

Zur Vereinfachung der Eingabe und Steuerung elektronischer Geräte werden daher Sprachsteuerungen eingesetzt, die auf eindeutig definierten technischen Begriffen basieren, denen bestimmte Funktionen des Steuerungsmenüs zugeordnet werden. Dies hat nachteilig zur Folge, dass dem Nutzer die Begriffe sowie die Menüstruktur bekannt sein müssen und der Nutzer die Bedienung des elektronischen Geräts erlernt haben muss.

Es ist auch bekannt, neben den technischen Begriffen weitere Synonyme, insbesondere Alltagsbegriffe, in einer Zuordnungsliste bereitzustellen, anhand welcher nach Eingabe eines Begriffs die entsprechende Funktion herausgesucht wird. Auf diese Weise wird erreicht, dass die Spracheingabe nicht auf die vorgegebenen technischen Begriffe beschränkt ist, sondern auch üblicherweise im Alltag gebrauchte Synonyme. d. h. mit den definierten Steuerungsmenü-Begriffen sinnverwandte Begriffe oder Zeichenfolgen, erkannt werden. Dabei stellt sich jedoch das Problem, dass die Synonyme nicht notwendigerweise eindeutig sind.

Aus der WO 97/10583 ist ein Verfahren zur automatischen Steuerung eines oder mehrerer Geräte durch Sprachkommandos oder per Sprachdialog im Echtzeitbetrieb und eine Vorrichtung zum Ausführen des Verfahrens bekannt. Bei dem Verfahren ist eine fixierte Syntax- und Kommandostruktur vorhanden. Befehle können dabei dadurch eingegeben werden, dass auch synonyme Wörter bzw. unterschiedliche Aussprachevarianten in einem Vorfeld definiert sind. Werden Namen eingegeben, um eine Telefonverbindung aufzubauen, bestätigt das Sprachdialogsystem nach erfolgter Eingabe eines Namens den erkannten Namen, um bei einem falsch verstandenen Namen durch eine Abbruchfunktion ein Wählen der Telefonnummer zu verhindern.

Aus der gattungsbildenden US 2002/0120455 A1 ist ein Verfahren und eine Vorrichtung zur Spracheingabe bekannt, bei der ein eingegebener Begriff mit einer Liste in einer Datenbank verglichen wird. Wird dabei ermittelt, dass zu dem durch den Benutzer eingegebenen Begriff ein eigentlich vorgesehener, anderer Begriff existiert, so wird der Benutzer auf diesen anderen Begriff durch Darstellung in einer Anzeige hingewiesen.

Aufgabe der Erfindung war es daher, ein verbessertes Informationssystem für Fahrzeuge sowie ein Verfahren zur Sprachsteuerung elektronischer Geräte zu schaffen, mit dem eine einfache Bedienung auch sehr komplexer elektronischer Geräte ohne aufwendige Einweisung in die Bedienung möglich ist und das einem erfahrenen Nutzer eine schnell Bedienung ermöglicht.

Die Aufgabe wird mit dem gattungsgemäßen Informationssystem erfindungsgemäß dadurch gelöst, dass die Spracheingabeeinheit zur Dialogspracheingabe derart ausgebildet ist, dass bei Eingabe eines Synonyms der mindestens eine dem eingegebenen Begriff zugeordnete definierte Steuerungsmenü-Begriff ausgegeben und eine Bestätigung oder Auswahl des mindestens einen ausgegebenen Steuerungsmenü-Begriffs durch den Nutzer eingeholt wird.

Die Aufgabe wird entsprechend mit dem gattungsgemäßen Verfahren zur Sprachsteuerung elektronischer Geräte erfindungsgemäß gelöst durch Dialogspracheingabe mit dem Schritt:
- Bestätigen oder Auswählen des mindestens einen ausgegebenen Steuerungsmenü-Begriffs (SB) durch den Nutzer.

Bei Verwendung eines alltagsgebräulichen Synonyms kann somit zurückgefragt werden, ob ein eindeutig definierter Steuerungsmenü-Begriff bzw. welcher von mehreren eindeutig definierten Steuerungsmenü-Begriffen zutreffend ist. Dies hat den Vorteil, dass ein geübter Nutzer, der die vorgegebenen definierten Steuerungsmenü-Begriffe kennt, die Dialogeingabe umgehen und entsprechend schnell Funktionen auswählen kann. Zum anderen erhalten ungeübte neue Benutzer Zugang zum Informationssystem, indem eine Sprachsteuerung anhand von Alltagsbegriffen, d. h. Synonyme, ebenfalls zielführend ist und dabei während der normalen Nutzung die eigentlichen definierten Steuerungsmenü-Begriffe für eine schnellere Systembedienung begleitend erlernt werden.

Damit kann das Informationssystem mit einem minimalen vorhergehenden Lernprozess sprachgesteuert werden, wobei ein anwendungsbegleitender, unwillkürlicher Lernprozess stattfindet, der in einer effizienteren Systemnutzung mündet.

Dabei bleiben die Eingabe-Ausgabefunktionalitäten trotz der unterschiedlichen Formen der Sprachsteuerung einerseits über die definierten Steuerungsmenü-Begriffe und andererseits über die Synonyme konsistent, da sich die Funktionalitäten je nach Ubungsstatus nicht ändern. Dennoch können Nutzer mit unterschiedlichen Systemkenntnissen alle Funktionen des Informationssystems differenziert bei konsistenten Eingabe-Ausgabe-Beziehungen ausschöpfen. Der Nutzer kann sich daher mehr auf die eigentliche Fahraufgabe konzentrieren.

Die Erfindung wird nachfolgend anhand der beigefügten Zeichnung näher erläutert. Es zeigt:

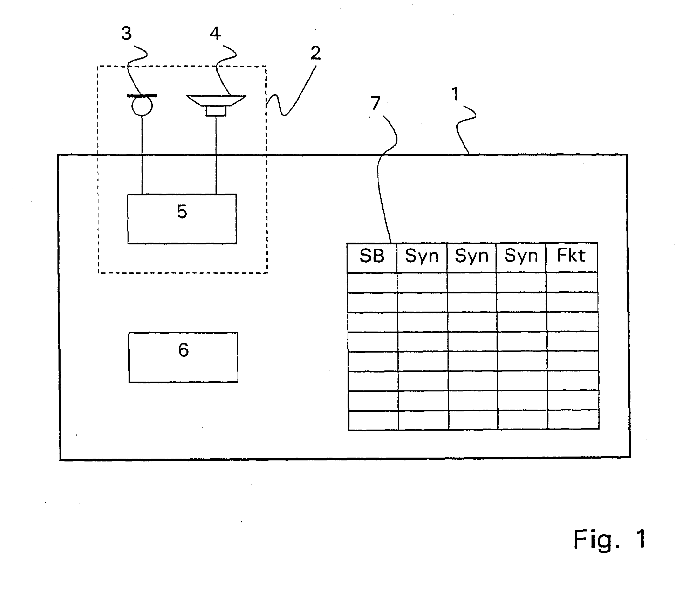

- Fig. 1 -: Skizze eines Informationssystems für Fahrzeuge mit Spracheingabeeinheit, mit menügeführter Steuerungseinheit und Zuordnungsbegriffsliste.

Die Figur 1 lässt ein Informationssystem 1 für Fahrzeuge mit einer Spracheingabeeinheit 2 erkennen, die ein Mikrophon 3, einen Lautsprecher 4 und eine Spracherkennungs- sowie gegebenenfalls Sprachsimulationseinheit 5 hat. Die Spracheingabeeinheit ist an eine menügeführte Steuerungseinheit 6 angeschlossen, die vorzugsweise als softwaregesteuerte Mikrocontrollerbaugruppe ausgeführt ist. Die Steuerungseinheit 6 greift auf eine Zuordnungsbegriffsliste 7 zu, die auf einem Datenspeicher abgelegt ist.

Die Zuordnungsbegriffsliste enthält in herkömmlicher Weise Steuerungs-menü-Begriffe SB mit zugeordneten Funktionen Fkt des Informations-systems 1, wie z. B. Menüpunkte eines Steuerungsmenüs und gegebenen-falls damit verbundene Funktionalitäten des Informationssystems 1.

Erfindungsgemäß sind den definierten Steuerungsmenü-Begriffen SB jeweils Synonyme Syn zugeordnet, die aus der Alltagssprache des Benutzers abgeleitet sind. Die Synonyme Syn sind mit den definierten Steuerungsmenü-Begriffen SB sinnverwandte Steuerungsbefehle oder Zeichenfolgen, die auf einen Steuerungsmenü-Begriff SB hinweisen (bspw. Nummernfolgen für den Steuerungsmenü-Begriff "TELEFONIEREN"). Mit einem solchen Informationssystem 1 wird eine dialoggeführte Sprachsteuerung realisiert, die darauf basiert, dass jedem relevanten technischen Steuerungsmenü-Begriff SB der Menüstruktur ausreichend viele Synonyme Syn zugeordnet sind. Einzelnen Synonymen Syn können auch mehrere dialogführende Steuerungsmenü-Begriffe zugeordnet werden. Sobald ein mehrdeutiges Synonym Syn eingegeben wurde, wird von dem Informationssystem 1 zurückgefragt, ob und gegebenenfalls welche zugeordnete dialogführende Steuerungsmenü-Begriffe SB zutreffend sind.

Dies wird nachfolgend anhand eines Beispiels verdeutlicht. Die definierten Steuerungsmenü-Begriffe SB werden dabei jeweils in Großbuchstaben wiedergegeben.

### Beispiel Telefonieren:

Der Fahrer möchte mit dem Informationssystem 1 eine bestimmte Person anrufen. Hierzu sind verschiedene Dialogmöglichkeiten mit dem Informationssystem 1 über die Spracheingabeeinheit 2 denkbar:
1. Der Nutzer kann, anstatt die gesamte hierarchische Struktur des Steuerungsmenüs durchzugehen, wie z. B. TELEKOMMUNIKATION-TELEFON-ANRUFEN-0123456789, einfach nur die Telefonnummer 0123456789 nennen. Daraufhin erkennt das Informationssystem 1 die Zahlenkolonne als Synonym Syn und fragt gegebenenfalls nach, ob die angegebene Telefonnummer angerufen werden soll, sofern eine Zahlenkolonne als Synonym Syn mehrfach verschiedenen definierten Steuerungsmenü-Begriffen SB zugeordnet wurden.
2. So kann bei Mehrdeutigkeit der eingegebenen Information rückgefragt werden, ob beispielsweise das Menü TELEFON oder das Menü FAX ausgewählt werden soll. Ab diesem Auswahlpunkt kann der Nutzer dann den Entscheidungsbaum im Steuerungsmenü weiterverfolgen.
3. Sofern der Nutzer bereits den Menüpunkt des Steuerungsmenüs TELEFON ausgewählt hat, ist auch eine akustische Dialogrückfrage des Informationssystems 1 wie folgt denkbar: "die Nummer 0123456789 ANRUFEN" oder im ADRESSSPEICHER-ABLEGEN?". Diese Abfrage wird durch den Nutzer dann beispielsweise durch Spracheingabe des definierten Steuerungsmenü-Begriffs "ANRUFEN" bestätigt.
4. Wird beispielsweise der synonyme Begriff "TELEFONIEREN" genutzt, dem unterschiedliche Systemfunktionen zugeordnet sind, ist folgender Dialog denkbar: "ich will TELEFONIEREN (Synonym)" ― "Möchten Sie eine NUMMER EINGEBEN oder aus dem ADRESSSPEICHER-AUSWÄHLEN?" - "ich will eine NUMMER EINGEBEN" - "Bitte nennen Sie die Nummer!" - 0123456789".

Die geeigneten Synonyme Syn für die dialogführenden definierten Steuerungsmenü-Begriffe SB werden empirisch beispielsweise in Beobachtungsversuchen mit ausreichend vielen und aus verschiedenen Lebensbereichen ausgewählten Probanten gewonnen, die zumindest annähernd repräsentativ für die anvisierte Nutzergruppe des elektronischen Geräts sein sollten.

Die erfindungsgemäße synonymgesteuerte Dialogführung wird bevorzugt bei elektronischen Multifunktionsgeräten eingesetzt, die beispielsweise Radio, Telefon und Navigation in einem Informationssystem kombinieren.

## Patentansprüche

1. Informationssystem (1) für Fahrzeuge mit einer Spracheingabeeinheit (2) und mit einer menügeführten Steuerungseinheit (6), wobei die Spracheingabeeinheit (2) eine Zuordnungsbegriffsliste (7) mit definierten Steuerungsmenü-Begriffen (SB) und zugeordneten Funktionen (Fkt) eines Steuerungsmenüs sowie Synonyme (Syn) zu den definierten Steuerungsmenü-Begriffen (SB) hat, wobei die Zuordnung einer Funktion (Fkt) des Steuerungsmenüs zu einem eingegebenen Begriff in Abhängigkeit der Einträge in der Zuordnungsbegriffsliste (7) unter Berücksichtigung der Synonyme (Syn) erfolgt und die zugeordnete Funktion (Fkt) an die Steuerungseinheit (6) zur Ausführung der Funktion (Fkt) weitergeleitet wird, wobei die Spracheingabeeinheit (2) zur Dialogspracheingabe derart ausgebildet ist, dass bei Eingabe eines Synonyms (Syn) der mindestens eine dem eingegebenen Begriff zugeordnete definierte Steuerungsmenü-Begriff (SB) ausgegeben wird, **dadurch gekennzeichnet, dass** eine Bestätigung oder Auswahl des mindestens einen ausgegebenen Steuerungsmenü-Begriffs (SB) durch den Nutzer eingeholt wird.

2. Verfahren zur Sprachsteuerung elektronischer Geräte, insbesondere von Informationssystemen (1) für Fahrzeuge, durch Spracheingabe eines Begriffs zur Auswahl einer Funktion (Fkt) aus einem Steuerungsmenü mit den Schritten:
- Zuordnen einer Funktion (Fkt) des Steuerungsmenüs zu dem eingegebenen Begriff von Einträgen in einer Zuordnungsbegriffsliste (7) mit definierten Steuerungsmenü-Begriffen (SB) und mit Synonymen (Syn) zu den definierten Steuerungsmenü-Begriffen (SB), und
- Ausführen der zugeordneten Funktion (Fkt),
- Ausgeben des mindestens einen dem eingegebenen Begriff zugeordneten definierten Steuerungsmenü-Begriffs (SB), wenn ein Synonym (Syn) als Begriff eingegeben wurde,
**gekennzeichnet durch** Dialogspracheingabe mit dem Schritt:
- Bestätigen oder Auswählen des mindestens einen ausgegebenen Steuerungsmenü-Begriffs (SB) **durch** den Nutzer.

## Claims

1. Information system (1) for vehicles, having a voice input unit (2) and having a menu-driven control unit (6), the voice input unit (2) having an association term list (7) with defined control menu terms (SB) and associated functions (Fkt) of a control menu as well as synonyms (Syn) of the defined control menu terms (SB), a function (Fkt) of the control menu being associated with a term which has been input, on the basis of the entries in the association term list (7), taking into account the synonyms (Syn), and the associated function (Fkt) being forwarded to the control unit (6) in order to perform the function (Fkt), the voice input unit (2) being designed for dialogue voice input in such a manner that, when a synonym (Syn) is input, the at least one defined control menu term (SB) associated with the term which has been input is output, **characterized in that** the user obtains confirmation or selection of the at least one control menu term (SB) which has been output.

2. Method for the voice control of electronic devices, in particular of information systems (1) for vehicles, by means of the voice input of a term for selecting a function (Fkt) from a control menu, said method having the following steps:
- a function (Fkt) of the control menu is associated with the input term from entries in an association term list (7) with defined control menu terms (SB) and with synonyms (Syn) of the defined control menu terms (SB), and
- the associated function (Fkt) is performed, and
- the at least one defined control menu term (SB) associated with the term which has been input is output if a synonym (Syn) has been input as the term,
**characterized by** dialogue voice input with the following step:
- the user confirms or selects the at least one control menu term (SB) which has been output.

## Revendications

1. Système d'information (1) pour véhicule, doté d'une unité (2) d'introduction vocale et d'une unité (6) de commande à menu,
l'unité (2) d'introduction vocale présentant une liste (7) de termes de référence qui présente des termes définis (SB) du menu de commande auxquels sont associées des fonctions (Fkt) d'un menu de commande ainsi que des synonymes (Syn) des termes (SB) définis du menu de commande,
l'association d'une fonction (Fkt) du menu de commande à un terme introduit s'effectuant en fonction des entrées dans la liste (7) de termes de référence en tenant compte des synonymes (Syn),
la fonction (Fkt) associée étant transmise à l'unité de commande (6) pour l'exécution de la fonction (Fkt),
l'unité (2) d'introduction vocale étant configurée pour permettre une introduction vocale par dialogue de telle sorte que lors de l'introduction d'un synonyme (Syn), le ou les termes définis (SB) du menu de commande associés au terme introduit sont délivrés,
**caractérisé en ce que**
l'utilisateur introduit une confirmation ou une sélection du ou des termes (SB) du menu de commande délivrés.

2. Procédé de commande vocale d'appareils électroniques, en particulier de systèmes d'information
(1) pour véhicule, par introduction vocale d'un terme en vue de sélectionner une fonction (Fkt) dans un menu de commande, le procédé comportant les étapes qui consistent à :
- associer une fonction (Fkt) du menu de commande au terme introduit qui fait partie d'entrées sur une liste (7) de termes de référence qui contient des termes définis (SB) du menu de commande et des synonymes (Syn) des termes définis (SB) du menu de commande,
- exécuter la fonction (Fkt) associée,
- délivrer le terme défini (SB) du menu de commande associé à au moins l'un des termes introduits si c'est un synonyme (Syn) qui a été introduit comme terme,
**caractérisé par**
une entrée vocale de dialogue qui présente l'étape qui consiste à :
- faire confirmer ou sélectionner par l'utilisateur le ou les termes (SB) du menu de commande qui ont été délivrés.
